# FASCICULE DE BREVET EUROPEEN

(11) **EP 4 313 690 B1**
(45) Date de publication et mention de la délivrance du brevet: **20.11.2024**
(21) Numéro de dépôt: 22708982.8
(22) Date de dépôt: 11.02.2022
(51) Int. Cl.: B60R 19/24, B60R 19/18

(54) **PEAU DE PARE-CHOCS DE VÉHICULE AUTOMOBILE**
STOSSFÄNGERVERKLEIDUNG FÜR EIN KRAFTFAHRZEUG
MOTOR VEHICLE BUMPER SKIN

(30) Priorité: 23.03.2021 FR 2102918
(43) Date de publication de la demande: 07.02.2024
(73) Titulaire: Stellantis Auto SAS, 78300 Poissy (FR)
(72) Inventeur: ROYER, Guillaume, 91680 BRUYERES LE CHATEL (FR); PERON, Rodolphe, 95220 HERBLAY (FR); BOUDAN, Julien, 91210 DRAVEIL (FR)
(86) Numéro de dépôt international: PCT/FR2022/050255
(87) Numéro de publication internationale: WO 2022/200702

(56) Documents cités:
- EP-A1- 2 127 955
- DE-A1- 102005 029 544
- JP-U- H0 663 481
- KR-A- 20180 046 110

## Description

### [Domaine technique]

La présente invention concerne d'une manière générale la problématique de l'assemblage d'un élément de carrosserie sur la peau d'un pare-chocs de véhicule automobile. Elle vise en particulier une peau de pare-chocs destinée à être fixée à un autre élément de carrosserie par encliquetage de bords respectifs de ladite peau et dudit élément de carrosserie le long d'une ligne d'accostage.

### [Technique antérieure]

Le pare-chocs arrière d'un véhicule automobile comporte classiquement une peau de pare-chocs venue de moulage en matière plastique comprenant une face extérieure visible et une face intérieure.

La peau de pare-chocs comprend une partie centrale arrière ou bouclier et deux parties latérales ou crosses prolongeant les extrémités latérales du bouclier vers l'avant de sorte que la peau présente en vue de dessus sensiblement une forme de U ouvert vers l'avant.

De manière classique, le bouclier présente en vue de dessus une forme galbée de concavité dirigée vers l'avant et présente dans sa partie inférieure une découpe délimitée par un bord.

Le pare-chocs arrière d'un véhicule comporte également de manière classique une jupe de pare-chocs venue également de moulage en matière plastique.

Cette jupe comprend une partie inférieure plane s'étendant sensiblement longitudinalement en partie inférieure du véhicule de sorte à définir sa garde au sol, ainsi qu'une partie supérieure venant recouvrir la découpe ménagée dans la partie inférieure du bouclier de la peau de pare-chocs et dont le bord vient se fixer par encliquetage sur le bord correspondant de la peau de pare-chocs.

Ce bord de la peau de pare-chocs comprend ainsi une portion extérieure destinée à venir en affleurement d'une portion extérieure correspondante du bord de la jupe de pare-chocs, le long d'une ligne d'accostage

Afin d'obtenir des jeux d'affleurement convenables au niveau de cette ligne d'accostage entre la partie supérieure de la jupe de pare-chocs et le bouclier de peau de pare-chocs, il est connu que le bord de la peau de pare-chocs soit également pourvu d'une gouttière ou gouge à profil en U dont l'ouverture est orientée vers l'extérieur du véhicule.

Une telle gouttière comprend classiquement une paroi latérale proximale raccordée à la portion extérieure du bord de la peau de pare-chocs, une paroi latérale distale s'étendant sensiblement parallèlement à cette paroi latérale proximale, ainsi qu'une paroi de fond reliant les deux extrémités intérieures de ces parois latérales et dans laquelle sont ménagées des fenêtres de clipsage destinées à permettre l'encliquetage de pattes de clipsage correspondantes s'étendant dans le prolongement d'un retour intérieur du bord de la jupe de pare-chocs.

Afin de répondre notamment à des contraintes de style, la ligne d'accostage entre la partie supérieure de la jupe de pare-chocs et la peau de pare-chocs comprend généralement plusieurs portions incurvées dont la courbure peut être particulièrement prononcée.

Par ailleurs, ces pièces plastiques formant une partie de la carrosserie du véhicule sont sujettes à la dilatation durant la période d'utilisation de ce véhicule, notamment lors des périodes estivales où elles sont soumises à des fortes chaleurs.

Cette dilatation des portions fortement incurvées de la gouttière d'accostage de la peau de pare-chocs peut entrainer une modification sensible de leur courbure pouvant conduire à un écartement des bords d'accostage de la jupe et de la peau de pare-chocs, voire carrément à des déclipsages localisés de cette jupe. Le document JP H06 63481 U divulgue une peau de pare-chocs de véhicule automobile conforme au préambule de la revendication 1.

### [Exposé de l'invention]

La présente invention vise donc à améliorer la situation.

Elle propose à cet effet une peau de pare-chocs de véhicule automobile destinée à être fixée à un élément de carrosserie dudit véhicule par encliquetage de bords respectifs de ladite peau et dudit élément de carrosserie le long d'une ligne d'accostage présentant au moins un tronçon incurvé, le bord de ladite peau comprenant une portion extérieure destinée à venir en affleurement d'une portion extérieure correspondante du bord dudit élément, le bord de ladite peau comprenant également une portion intérieure se présentant sous la forme d'une gouttière à profil en U dont l'ouverture est orientée vers l'extérieur du véhicule, ladite gouttière comprenant une paroi latérale proximale raccordée à la portion extérieure du bord de ladite peau, une paroi latérale distale s'étendant sensiblement parallèlement à cette paroi latérale proximale, ainsi qu'une paroi de fond reliant les deux extrémités intérieures de ces parois latérales et dans laquelle sont ménagées des fenêtres de clipsage destinées à permettre l'encliquetage de pattes de clipsage correspondantes s'étendant dans le prolongement d'un retour intérieur du bord dudit élément ;
caractérisé en ce que ladite paroi latérale distale présente, au niveau de chaque tronçon incurvé de la ligne d'accostage, au moins une échancrure s'étendant jusqu'à ladite paroi de fond.

L'adjonction, au niveau des tronçons incurvés de la ligne d'accostage, d'au moins une telle échancrure sur la paroi latérale distale de la gouttière permet d'absorber les phénomènes de dilatation de la matière formant cette gouttière lorsque celle-ci est soumise à des fortes chaleurs, de sorte à limiter les variations de courbure de cette gouttière, à éviter tout risque de déclipsage localisé de l'élément de carrosserie et à préserver une bonne qualité d'effleurement sur toute la longueur de la ligne d'accostage.

Selon des caractéristiques préférées de ladite peau de pare-chocs selon l'invention :
- ladite au moins une échancrure présente une forme de V de sorte que sa largeur diminue progressivement entre l'extrémité libre de ladite paroi latérale distale et ladite paroi de fond suivant un angle d'amincissement prédéfini ;
- ledit angle d'amincissement est compris entre 10 et 30° ;
- l'extrémité intérieure constituant la pointe du V de chaque dite au moins une échancrure est arrondie ;
- ladite paroi latérale distale présente, au niveau de chaque tronçon incurvé de la ligne d'accostage, deux dites échancrures écartées l'une de l'autre ;
- l'écartement entre les deux dites échancrures d'un même tronçon incurvé est d'au moins 5 millimètres ;
- l'extrémité libre de ladite paroi latérale distale forme un rebord tourné à l'opposé de ladite paroi latérale proximale ;
- l'extrémité libre de ladite paroi latérale distale s'étend en retrait vis-à-vis de l'extrémité de ladite paroi latérale proximale raccordée à la portion extérieure du bord de ladite peau ; et/ou
- ladite peau est venue de moulage d'une seule pièce à partir d'un polymère thermoplastique renforcé éventuellement en fibres naturelles et/ou synthétiques.

L'invention vise également sous un second aspect, un véhicule automobile comportant une telle peau de pare-chocs.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue en perspective de trois quart arrière d'un pare-chocs arrière de véhicule automobile comportant une peau de pare-chocs selon l'invention assemblée à une jupe de pare-chocs ;
[Fig 2] est une vue en perspective de trois quart avant d'un tronçon incurvé de la ligne d'accostage entre la peau et la jupe de pare-chocs ;
[Fig 3] représente un agrandissement du détail III de la figure 2 ; et
[Fig 4] est une vue de coupe en perspective du tronçon incurvé de la d'accostage de la figure 2.

### [Description détaillée]

Dans la description qui va suivre et par convention, les termes « avant » et « arrière » seront utilisés pour définir la position relative d'un élément par rapport à un autre selon la direction générale de déplacement du véhicule.

Les termes « extérieur » et « intérieur » seront quant à eux associés à certaines portions de pièces du véhicule pour indiquer respectivement que ces portions sont visibles ou invisibles depuis l'extérieur du véhicule.

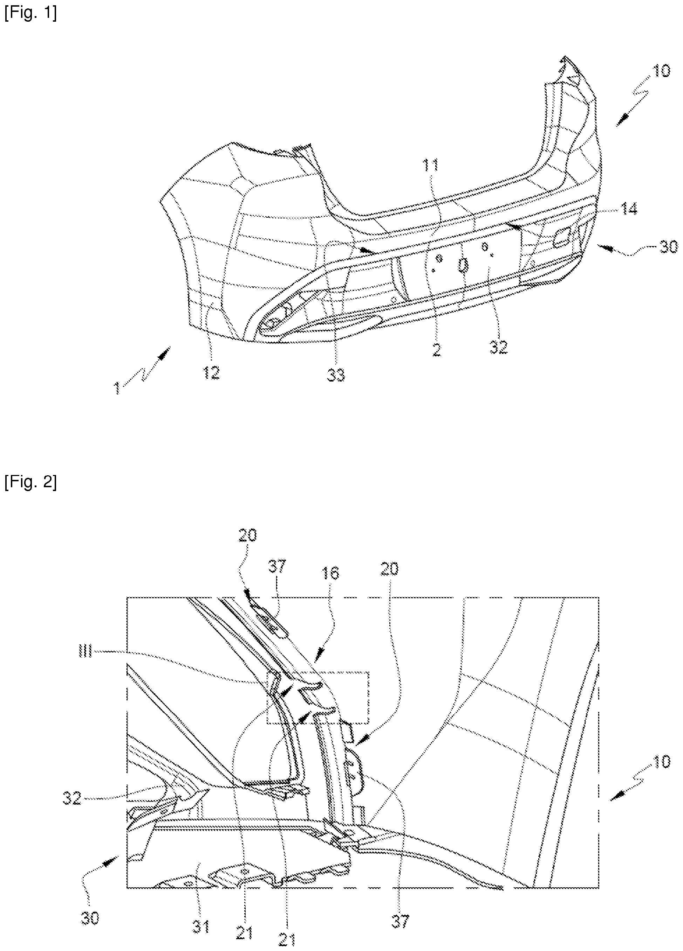

La figure 1 montre un pare-chocs arrière 1 de véhicule automobile comportant une peau de pare-chocs 10 et une jupe de pare-chocs 30 en matière plastique fixées par encliquetage l'une à l'autre.

Le pare-chocs arrière 1 peut également comprendre d'autres pièces techniques non représentées, tel qu'en particulier des renforts de pare-chocs fixés contre la face intérieure de la peau afin de la rigidifier, un capteur ou une caméra de recul, ainsi que des enjoliveurs rapportés contre la face extérieure de la peau et/ou de la jupe.

La peau de pare-chocs 10 et la jupe de pare-chocs 30 sont avantageusement venues chacune de moulage d'une seule pièce à partir d'un polymère thermoplastique tel que le Polypropylène (PP), le Polyéthylène (PE), le polyamide (PA), l'Acrylonitrile Styrène Acrylate (ASA) ou encore l'Acrylonitrile Butadiène Styrène/Polycarbonate (ABS/PC), renforcé éventuellement en fibres naturelles et/ou synthétiques.

La peau de pare-chocs 10 comprend une partie centrale arrière ou bouclier 11 et deux parties latérales ou crosses 12 prolongeant les extrémités latérales du bouclier 11 vers l'avant de sorte que cette peau 10 présente en vue de dessus sensiblement une forme de U ouvert vers l'avant.

Le bouclier 11 présente en vue de dessus une forme galbée de concavité dirigée vers l'avant et présente dans sa partie inférieure une découpe délimitée par un bord 14.

En référence à la figure 2, la jupe de pare-chocs 30 comprend une partie inférieure plane 31 s'étendant sensiblement longitudinalement en partie inférieure du véhicule de sorte à définir sa garde au sol, ainsi qu'une partie supérieure 32 s'étendant vers le haut depuis l'extrémité arrière de cette partie inférieure 31 et venant recouvrir la découpe ménagée dans la partie inférieure du bouclier 11 de la peau de pare-chocs 10.

Tel qu'illustré par la figure 1, le bord 33 de cette partie supérieure 32 de la jupe de pare-chocs 30 est fixé par encliquetage sur le bord 14 de la peau de pare-chocs 10 le long d'une ligne d'accostage 2.

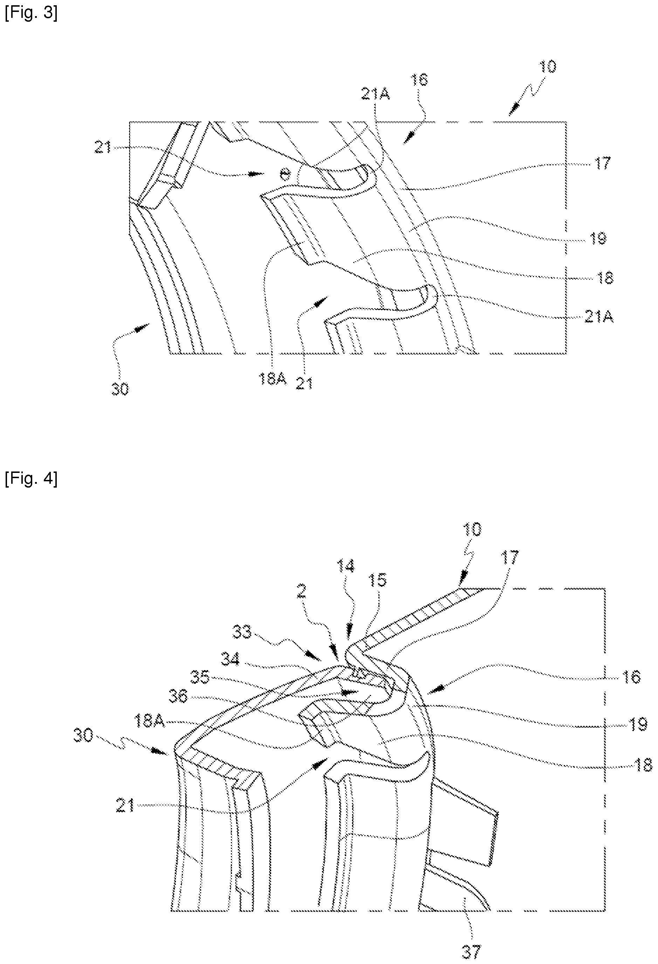

Plus précisément et en référence à la figure 4, le bord 14 de la peau de pare-chocs 10 comprend une portion extérieure 15 destinée venir en affleurement de la portion extérieure 34 du bord 33 de la jupe de pare-chocs 30 pour former la ligne d'accostage 2.

Toujours en référence à cette figure 4, le bord 14 de la peau de pare-chocs 10 comporte également une portion intérieure formée par une gouttière 16 présentant une profondeur avantageusement comprise entre 5 et 10 millimètres, cette gouttière 16 comprenant une première paroi latérale proximale 17 raccordée à la portion extérieure 15, une seconde paroi latérale distale 18 s'étendant sensiblement parallèlement à cette paroi latérale proximale 17, et une paroi de fond 19 reliant les deux extrémités intérieures de ces parois latérales 17, 18.

Outre sa portion extérieure 34, le bord 33 de la jupe de pare-chocs 30 comporte également une portion intérieure 35 comprenant un retour 36 prévu pour venir s'insérer dans la gouttière 16 du bord 14 de la peau de pare-chocs 10.

Comme on peut le remarquer sur les figures 2 et 4, la portion intérieure 35 du bord 33 comprend également plusieurs pattes de clipsage 37 s'étendant dans le prolongement du retour 36 et étant réparties à intervalle régulier le long de ce bord 33.

Ces pattes de clipsage 37 sont prévues pour venir s'encliqueter dans des fenêtres correspondantes 20 ménagées dans la paroi de fond 19 de la gouttière 16 (voir figure 2), de sorte à assurer la fixation de la partie supérieure de la jupe de pare-chocs 30 sur la peau de pare-chocs 10.

En référence à la figure 4, la paroi latérale distale 18 de cette gouttière 16 constitue une lame de rappel élastiquement déformable apte à exercer, en cas de forte chaleur ou lors d'un choc léger de la jupe 30 avec un obstacle entrainant un enfoncement de cette dernière, une force de rappel contre la portion extérieure 34 du bord 33 de cette jupe 30 participant à son retour dans sa forme initiale.

Afin de renforcer cet effet ressort et de faciliter les opérations de démoulage de la peau 10, l'extrémité libre de cette paroi latérale distale 18 forme un rebord 18A tourné à l'opposé de la paroi latérale proximale 17.

On notera également que l'extrémité libre 18A de cette paroi latérale distale 18 de la gouttière 16 s'étend avantageusement en retrait de quelques millimètres (par exemple, de 2 à 5 mm) vis-à-vis de l'extrémité de la paroi latérale proximale 17 raccordée à la portion extérieure 15 du bord 14, de sorte que cette extrémité libre demeure, après la fixation de la partie supérieure de la jupe 30 sur la peau 10, légèrement à l'écart de la portion extérieure 34 du bord 33 de cette jupe 30 afin d'éviter l'apparition de bruits parasites durant les phases de roulage du véhicule.

Définie par les bords 14 et 33, la ligne d'accostage 2 entre le bouclier 11 de la peau 10 et la partie supérieure 32 de la jupe 30 présente plusieurs tronçons incurvés présentant une courbure prononcée.

Selon l'invention et tel que cela est bien visible sur la figure 3, la paroi latérale distale 18 de la gouttière 16 du bord 14 présente, au niveau de chaque tronçon incurvé de la ligne d'accostage 2, deux échancrures 21 s'étendant jusqu'à la paroi de fond 19 de cette gouttière 16.

La présence de ces échancrures 21 permet d'absorber les phénomènes de dilatation de la matière plastique formant la gouttière 16 lorsque celle-ci est soumise à des fortes chaleurs, de sorte à limiter les variations de courbure de cette gouttière 16, à éviter tout risque de déclipsage localisé de la jupe de pare-chocs 30 et préserver une bonne qualité d'effleurement au niveau de la ligne d'accostage 2 entre le bouclier 11 de la peau 10 et la partie supérieure 32 de la jupe 30.

Chaque échancrure 21 présente une forme de V, de sorte que sa largeur diminue progressivement entre l'extrémité libre 18A de la paroi latérale distale 18 et la paroi de fond 19 suivant un angle d'amincissement prédéfini θ compris avantageusement entre 10 et 30°.

Le choix d'une telle forme en V permet d'assurer une excellente absorption de la dilatation de la matière plastique en évitant que les deux bords latéraux d'une échancrure ne se touchent, tout en limitant la perte de résistance mécanique.

Afin d'éviter tout risque de déchirure de la peau 30 et de faciliter les opérations de démoulage, l'extrémité intérieure 21A constituant la pointe du V de chaque échancrure (21) est avantageusement arrondie.

Dans le but de préserver une certaine rigidité des portions de matière séparant deux échancrures 21 et de faciliter les opérations de démoulage, les deux échancrures 20 de chaque tronçon incurvé de la ligne d'accostage 2 sont écartées d'au moins 5 millimètres l'une de l'autre.

Selon des variantes de réalisation non représentées, le nombre d'échancrures que présente chaque tronçon incurvé de la ligne d'accostage 2 est différent, par exemple égal à un ou trois.

Selon d'autres variantes de réalisation non représentées, ces échancrures peuvent présenter une forme différente, par exemple en U.

D'une manière générale, on rappelle que la présente invention ne se limite pas aux formes de réalisation décrites et représentées, mais qu'elle englobe toute variante d'exécution à la portée de l'homme du métier.

L'invention peut ainsi être également mise en oeuvre sur des peaux de pare-chocs avant sur lesquels sont fixées par encliquetage des écopes en matière plastique.

## Revendications

1. Peau de pare-chocs (10) de véhicule automobile destinée à être fixée à un élément de carrosserie (30) dudit véhicule par encliquetage de bords respectifs (14, 33) de ladite peau (10) et dudit élément de carrosserie (30) le long d'une ligne d'accostage (2) présentant au moins un tronçon incurvé, le bord (14) de ladite peau (10) comprenant une portion extérieure (15) destinée à venir en affleurement d'une portion extérieure correspondante (34) du bord (33) dudit élément (30), le bord (14) de ladite peau (10) comprenant également une portion intérieure se présentant sous la forme d'une gouttière à profil en U (16) dont l'ouverture est orientée vers l'extérieur du véhicule, ladite gouttière (16) comprenant une paroi latérale proximale (17) raccordée à la portion extérieure (15) du bord (14) de ladite peau (10), une paroi latérale distale (18) s'étendant sensiblement parallèlement à cette paroi latérale proximale (17), ainsi qu'une paroi de fond (19) reliant les deux extrémités intérieures de ces parois latérales (17, 18) et dans laquelle sont ménagées des fenêtres de clipsage (20) destinées à permettre l'encliquetage de pattes de clipsage correspondantes (37) s'étendant dans le prolongement d'un retour intérieur (36) du bord (33) dudit élément (30) ;
**caractérisé en ce que** ladite paroi latérale distale (18) présente, au niveau de chaque tronçon incurvé de la ligne d'accostage (2), au moins une échancrure (21) s'étendant jusqu'à ladite paroi de fond (19).

2. Peau de pare-chocs (10) selon la revendication 1, **caractérisée en ce que** ladite au moins une échancrure (21) présente une forme de V de sorte que sa largeur diminue progressivement entre l'extrémité libre de ladite paroi latérale distale (18) et ladite paroi de fond (19) suivant un angle d'amincissement prédéfini (θ).

3. Peau de pare-chocs (10) selon la revendication 2, **caractérisée en ce que** ledit angle d'amincissement (θ) est compris entre 10 et 30°.

4. Peau de pare-chocs (10) selon l'une des revendications 2 ou 3, **caractérisée en ce que** l'extrémité intérieure (21A) constituant la pointe du V de chaque dite au moins une échancrure (21) est arrondie.

5. Peau de pare-chocs (10) selon l'une des revendications 1 à 4, **caractérisée en ce que** ladite paroi latérale distale (18) présente, au niveau de chaque tronçon incurvé de la ligne d'accostage (2), deux dites échancrures (21) écartées l'une de l'autre.

6. Peau de pare-chocs (10) selon la revendication 5, **caractérisée en ce que** l'écartement entre les deux dites échancrures (21) d'un même tronçon incurvé est d'au moins 5 millimètres.

7. Peau de pare-chocs (10) selon l'une des revendications 1 à 6, **caractérisée en ce que** l'extrémité libre de ladite paroi latérale distale (18) forme un rebord (18A) tourné à l'opposé de ladite paroi latérale proximale (17).

8. Peau de pare-chocs (10) selon l'une des revendications 1 à 7, **caractérisée en ce que** l'extrémité libre de ladite paroi latérale distale (18) s'étend en retrait vis-à-vis de l'extrémité de ladite paroi latérale proximale (17) raccordée à la portion extérieure (15) du bord (14) de ladite peau (10).

9. Peau de pare-chocs (10) selon l'une des revendications 1 à 8, **caractérisée en ce qu'**elle est venue de moulage d'une seule pièce à partir d'un polymère thermoplastique renforcé éventuellement en fibres naturelles et/ou synthétiques.

10. Véhicule automobile comportant une peau de pare-chocs (10) selon l'une des revendications 1 à 9.

## Patentansprüche

1. Stoßfängerhaut (10) für ein Kraftfahrzeug, die an einem Karosserieteil (30) des Kraftfahrzeugs befestigt werden kann, indem jeweilige Kanten (14, 33) der Haut (10) und des Karosserieteils (30) entlang einer Andocklinie (2), die mindestens einen gekrümmten Abschnitt aufweist, eingerastet werden, wobei der Rand (14) der Haut (10) einen äußeren Abschnitt (15) aufweist, der mit einem entsprechenden äußeren Abschnitt (34) des Randes (33) des Elements (33) bündig ist 0), wobei der Rand (14) der Haut (10) ferner einen inneren Abschnitt in Form einer U-förmigen Rinne (16) aufweist, deren Öffnung zur Außenseite des Fahrzeugs gerichtet ist, wobei die Rinne (16) eine proximale Seitenwand (17), die mit dem äußeren Abschnitt (15) des Randes (14) der Haut (10) verbunden ist, eine distale Seitenwand (18), die sich im Wesentlichen parallel zu dieser proximalen Seitenwand (17) erstreckt, sowie eine Bodenwand (19) aufweist, die die beiden inneren Enden verbindet In diesen Seitenwänden (17, 18) sind Einrastfenster (20) zum Einrasten entsprechender Einrastlaschen (37) vorgesehen, die sich in Verlängerung einer inneren Rückführung (36) des Randes (33) des Elementes (30) erstrecken;
**dadurch gekennzeichnet, dass** die distale Seitenwand (18) im Bereich jedes gekrümmten Abschnitts der Ankerlinie (2) mindestens eine Aussparung (21) aufweist, die sich bis zur Bodenwand (19) erstreckt.

2. Stoßfängerhaut (10) nach Anspruch 1, **dadurch gekennzeichnet, dass** die mindestens eine Aussparung (21) V-förmig ist, sodass ihre Breite zwischen dem freien Ende der distalen Seitenwand (18) und der Bodenwand (19) unter einem vorbestimmten Verjüngungswinkel (θ) allmählich abnimmt.

3. Stoßfängerhaut (10) nach Anspruch 2, **dadurch gekennzeichnet, dass** der Verjüngungswinkel (θ) zwischen 10 und 30° liegt.

4. Stoßfängerhaut (10) nach einem der Ansprüche 2 oder 3, **dadurch gekennzeichnet, dass** das innere Ende (21A), das die Spitze des V jeder der mindestens einen Aussparungen (21) bildet, abgerundet ist.

5. Stoßfängerhaut (10) nach einem der Ansprüche 1 bis 4, **dadurch gekennzeichnet, dass** die distale Seitenwand (18) im Bereich jedes gekrümmten Abschnitts der Ankerlinie (2) zwei Aussparungen (21) aufweist, die voneinander beabstandet sind.

6. Stoßfängerhaut (10) nach Anspruch 5, **dadurch gekennzeichnet, dass** der Abstand zwischen den beiden Aussparungen (21) desselben gekrümmten Abschnitts mindestens 5 mm beträgt.

7. Stoßfängerhaut (10) nach einem der Ansprüche 1 bis 6, **dadurch gekennzeichnet, dass** das freie Ende der distalen Seitenwand (18) einen Flansch (18A) bildet, der der proximalen Seitenwand (17) gegenüberliegt.

8. Stoßfängerhaut (10) nach einem der Ansprüche 1 bis 7, **dadurch gekennzeichnet, dass** sich das freie Ende der distalen Seitenwand (18) gegenüber dem Ende der proximalen Seitenwand (17), das mit dem äußeren Abschnitt (15) des Randes (14) der Haut (10) verbunden ist, zurückversetzt erstreckt.

9. Stoßstangenhaut (10) nach einem der Ansprüche 1 bis 8, **dadurch gekennzeichnet, dass** sie aus einem thermoplastischen Polymer, das gegebenenfalls mit natürlichen und/oder synthetischen Fasern verstärkt ist, einstückig geformt ist.

10. Kraftfahrzeug mit einer Stoßfängerhaut (10) nach einem der Ansprüche 1 bis 9.

## Claims

1. A bumper skin (10) of a motor vehicle intended to be fixed to a bodywork element (30) of said vehicle by snap-fastening respective edges (14, 33) of said skin (10) and of said bodywork element (30) along a docking line (2) having at least one curved section, the edge (14) of said skin (10) comprising an outer portion (15) intended to be flush with a corresponding outer portion (34) of the edge (33) of said element (30), an edge (14) of said skin (10) also comprising an inner portion in the form of a channel having a U-shaped profile (16), the opening of which is oriented towards the outside of the vehicle, said channel (16) comprising a proximal side wall (17) connected to the outer portion (15) of the edge (14) of said skin (10), a distal side wall (18) extending substantially parallel to this proximal side wall (17), and a bottom wall (19) connecting the two inner ends of these side walls (17) , 18) and in which are provided snap-fastening windows (20) intended to allow the snap-fastening of corresponding snap-fastening tabs (37) extending in the extension of an inner return (36) of the edge (33) of said element (30);
**characterized in that** said distal side wall (18) has, at each curved section of the docking line (2), at least one notch (21) extending as far as said bottom wall (19).

2. A bumper skin (10) according to claim 1, **characterized in that** said at least one notch (21) is V-shaped so that its width decreases progressively between the free end of said distal side wall (18) and said bottom wall (19) according to a predefined thinning angle (θ).

3. Bumper skin (10) according to claim 2, **characterized in that** said thinning angle (θ) is between 10 and 30°.

4. Bumper skin (10) according to either of claims 2 and 3, **characterized in that** the inner end (21A) constituting the point of the V of each of said at least one notch (21) is rounded.

5. Bumper skin (10) according to one of claims 1 to 4, **characterized in that** the said distal lateral wall (18) has, at each curved section of the docking line (2), two of the said notches (21) spaced apart from one another.

6. Bumper skin (10) according to claim 5, **characterized in that** the distance between the two said notches (21) of the same curved section is at least 5 millimeters.

7. Bumper skin (10) according to one of claims 1 to 6, **characterized in that** the free end of the said distal side wall (18) forms a rim (18A) turned away from the said proximal side wall (17).

8. Bumper skin (10) according to one of claims 1 to 7, **characterized in that** the free end of the said distal side wall (18) extends recessed opposite the end of the said proximal side wall (17) connected to the outer portion (15) of the edge (14) of the said skin (10).

9. Bumper skin (10) according to one of claims 1 to 8, **characterized in that** it is molded in a single piece from a thermoplastic polymer optionally reinforced with natural and/or synthetic fibers.

10. Motor vehicle comprising a bumper skin (10) according to one of claims 1 to 9.
